# EUROPÄISCHE PATENTSCHRIFT

(11) **EP 2 181 310 B1**
(45) Veröffentlichungstag und Bekanntmachung des Hinweises auf die Patenterteilung: **15.03.2017**
(21) Anmeldenummer: 08785605.0
(22) Anmeldetag: 18.08.2008
(51) Int. Cl.: G01D 5/48, F15B 15/28, G01B 7/14, G01B 15/00

(54) **DOPPELKOLBENSTANGE**
DOUBLE PISTON ROD
DOUBLE TIGE DE PISTON

(30) Priorität: 16.08.2007 DE 102007038718
(43) Veröffentlichungstag der Anmeldung: 05.05.2010
(73) Patentinhaber: Astyx GmbH, 85521 Ottobrunn (DE)
(72) Erfinder: TRUMMER, Guenther, 91083 Baiersdorf (DE); GEHRING, Ralf, 85622 Feldkirchen (DE)
(74) Vertreter: Kunz, Herbert
(86) Internationale Anmeldenummer: PCT/EP2008/006778
(87) Internationale Veröffentlichungsnummer: WO 2009/021755

(56) Entgegenhaltungen:
- EP-A- 1 752 665
- DE-A1- 10 205 904
- DE-A1-102006 038 469
- DE-A1-102007 020 046
- US-A- 4 588 953
- US-A- 6 005 395

## Beschreibung

In festverrohrten Prozessanlagen der Lebensmittel- und pharmazeutischen Industrie werden Pneumatikventile eingesetzt als
(a) Einsitz-Absperrventile zur einfachen Absperrung an Rohrleitungskreuzungspunkten;
(b) Einsitz-Wechselventile zur Zusammenführung von Produkten aus zwei Rohrleitungen in eine Rohrleitung bzw. zur Verteilung von einer Rohrleitung auf zwei Rohrleitungen;
(c) Doppelsitzventile zur vermischungssicheren Trennung von feindlichen Produkten an Rohrleitungskreuzungspunkten.

Die genaue Funktion der Ventile ist z.B. in den Firmenbroschüren der Fa. GEA/Tuchenhagen bzw. Alfa Laval beschrieben.

Zur Prozesssteuerung ist es erforderlich die Position der Ventile zu erfassen. Hierzu werden Sensoren eingesetzt wie Potentiometer, LVDT oder nur einfache Reed-Schalter. All diese Sensoren sind aufwendig in der Montage, unterliegen teilweise mechanischem Verschleiß und benötigen zusätzlichen externen Platz.

DE 102 05 904 A1 offenbart eine Abstandsmessvorrichtung und ein Verfahren zur Bestimmung eines Abstands, wobei eine Sensoreinrichtung ein Hochfrequenz-Einspeisesystem aufweist, das dazu dient, durch Abstrahlen und Empfangen von Wellen einen bestimmten Abstand im Innenraum eines einzelnen Pneumatikzylinders auszumessen, und wobei das Einspeisesystem in den Zylinder integriert ist.

EP 1 752 665 A beschreibt zusätzlich eine in einer derartigen Mikrowellen-Antennenanordnung angeordnete dielektrische Schutzabdeckungseinrichtung zum mechanischen Schutz der Mikrowellen-Antennenanordnung.

Auch die US 4 588 953 A und die US 6 005 395 A zeigen jeweils ein Mikrowellen-Verfahren und eine Vorrichtung zur Bestimmung der Position eines Kolbens in einem Pneumatikzylinder.

Der Erfindung liegt die Aufgabe zugrunde, eine Abstandsmessvorrichtung zur Detektion der Position eines Reflexionskörpers in einer Leitungsstruktur zur Verfügung zu stellen, welche besonders einfach montierbar ist, keinen zusätzlichen externen Platz benötigt und im Betrieb keinem mechanischen Verschleiß unterliegt.

Die Aufgabe wird durch die Merkmale des Anspruchs 1 gelöst.

Die mit der Erfindung erzielten Vorteile bestehen darin, dass die Sensoreinrichtung und die Auswerteelektronik vollständig in das Ventil integrierbar sind, und zwar in die Leitungsstruktur bzw. in einen von der Leitungsstruktur abgewandten und hinter der Antenne zur Einkopplung der elektromagnetischen Welle platzierten Elektronikraum. Weiterhin ist es vorteilhaft, dass die Abstandsmessvorrichtung berührungslos arbeitet. Zudem kann mit der erfindungsgemäßen Abstandsmessvorrichtung bzw. dem Verfahren hochgenau die Position des Reflexionskörpers in der Leitungsstruktur ermittelt werden.

Vorteilhafte Weiterbildungen der Erfindung sind in den dazugehörigen Unteransprüchen beschrieben.

Beim Einsatz der Abstandsmessvorrichtung in einem Ventil, insbesondere bei einem Pneumatikventil dient dessen Zylinder, worin ein Kolben beweglich geführt ist, zweckmäßigerweise als Leitungsstruktur.

Der vorgeschlagene Mikrowellensensor (Sensoreinrichtung) läßt sich vollständig in den Kolbenraum des Zylinders des Pneumatikventils integrieren, misst berührungslos und hochgenau die Ventilstellung.

Zur Detektion des im Zylinder beweglichen Kolbens fungiert die Stirnseite der Kolbenstange des Kolbens als Reflexionskörper.

Zur Reflexion der elektromagnetischen Welle ist die Stirnseite der Kolbenstange zweckmäßiger Weise als Kurzschluss für die elektromagnetische Welle ausgebildet. Als Kurzschluss für die elektromagnetische Welle eignet sich ein Aufbau in Form von zwei oder mehreren metallischen Scheiben mit dielektrischer Füllung, wobei der Aufbau auf der Stirnfläche der Kolbenstange montiert werden kann.

Erfindungsgemäß werden zwei ineinander laufende Kolbenstangen gleichzeitig und unabhängig voneinander detektiert, so dass die Vorrichtung zur Abstandsmessung bei Doppelsitzventilen verwendet werden kann.

Zur besonders platzsparenden, frequenzgenauen und berührungslosen Einspeisung des Sendesignals in die Leitungsstruktur erfolgt die Einkopplung der elektromagnetischen Welle zur Detektion einer inneren Kolbenstange zweckmäßigerweise kapazitiv oder über einen Koppelschlitz.

Um bei der Einkopplung der elektromagnetischen Welle einen möglichst geringen Reflexionsfaktor zu erhalten, ist es zweckmäßig, die Einkopplung in die Leitungsstruktur über eine elektrische Transformationsstufe durchzuführen. In zweckmäßiger Weiterbildung ist die elektrische Transformationsstufe als mechanische Treppenstufe ausgeführt, welche zweckmäßigerweise mit abnehmender Stufenhöhe in Richtung des Reflexionskörpers in der Nähe des Koppelschlitzes in der Leitungsstruktur vorgesehen ist.

Um eine Fortbewegung der elektromagnetischen Welle in der Leitungsstruktur zu erreichen, die innere Kolbenstange zu detektieren und ein hochgenaues Ergebnis in der Positionsbestimmung zu erhalten, liegt der Frequenzbereich der elektromagnetischen Welle zweckmäßigerweise zwischen einigen MHz und 100 GHz

Zur Detektion der inneren Kolbenstange wird die elektromagnetische Welle zweckmäßigerweise im E01-Mode eingekoppelt.

Zur Detektion einer zweiten, äußeren Kolbenstange am Doppelsitzventil ist es erfindungsgemäß vorgesehen, dass die Sensoreinrichtung ein Koaxialsystem umfasst.

Zur Realisierung des Koaxialsystems zur Detektion einer zweiten, äußeren Kolbenstange beispielsweise am Doppelsitzventil fungiert erfindungsgemäß ein Führungsrohr, worin die innere, erste Kolbenstange geführt ist, als Innenleiter des Koaxialsystems.

Zur Detektion weiterer, nach außen anschließender Kolbenstangen dient die Koaxialstruktur der zweiten, äußeren Kolbenstange zweckmäßigerweise als Innenleiter der Koaxialstruktur usw.

Zur Detektion der zweiten, äußeren Kolbenstange wird die elektromagnetische Welle zweckmäßigerweise induktiv in das Koaxialsystem eingekoppelt. Hierzu sind metallische Ringe zweckmäßig, welche zweckmäßigerweise fest und elektrisch leitend mit dem Führungsrohr, welches als Innenleiter des Koaxialsystems dient, verbunden sind und deren Außendurchmesser in Richtung der Kolbenstange abnimmt.

Zur elektrisch leitenden Verbindung der metallischen Ringe und des mit diesen verbundenen Führungsrohrs mit der koaxialen Zuleitung ist zweckmäßigerweise ein induktiver Übergang von dem Ring mit dem größten Durchmesser zur koaxialen Zuleitung vorgesehen. Zweckmäßigerweise erfolgt der induktive Übergang zwischen der koaxialen Zuleitung und dem Ring mit dem größten Durchmesser symmetrisch, und zwar mindestens zweimal um 180° versetzt oder viermal jeweils um 90° zwischen den einzelnen Kontaktierungen versetzt oder achtmal jeweils um 45° zwischen den einzelnen Kontaktierungen auf dem Ring versetzt.

In Abhängigkeit des Durchmessers der Kolbenstange im Koaxialsystem erfolgt die Detektion der zweiten, äußeren Kolbenstange und weiterer äußerer Kolbenstangen über die elektromagnetische Welle mit Frequenzen im Frequenzbereich von einigen MHz bis 100 GHz.

Zur Detektion der äußeren Kolbenstangen wird die elektromagnetische Welle zweckmäßigerweise im TEM- oder übermodierten H11-Mode eingekoppelt.

Um Druckluft an nachgeschaltete Systeme weiterzuleiten, kann in zweckmäßiger Weiterbildung bei Einkopplung der elektromagnetischen Welle in dem E01-Mode die Kolbenstange eine oder mehrere Bohrungen besitzen. Zweckmäßigerweise ist/sind die Bohrung/en mittig in der Kolbenstange vorgesehen.

Nachfolgend werden Ausführungsbeispiele der Erfindung anhand einer Zeichnung näher erläutert. Darin zeigen:
Figur 1 eine Schnittdarstellung des mechanischen Aufbaus einer Abstandsmessvorrichtung in einem Einsitzventil;
Figuren 2A und 2B schematische Darstellungen des Aufbaus der erfindungsgemäßen Abstandsmessvorrichtung in Doppelsitzventilen;

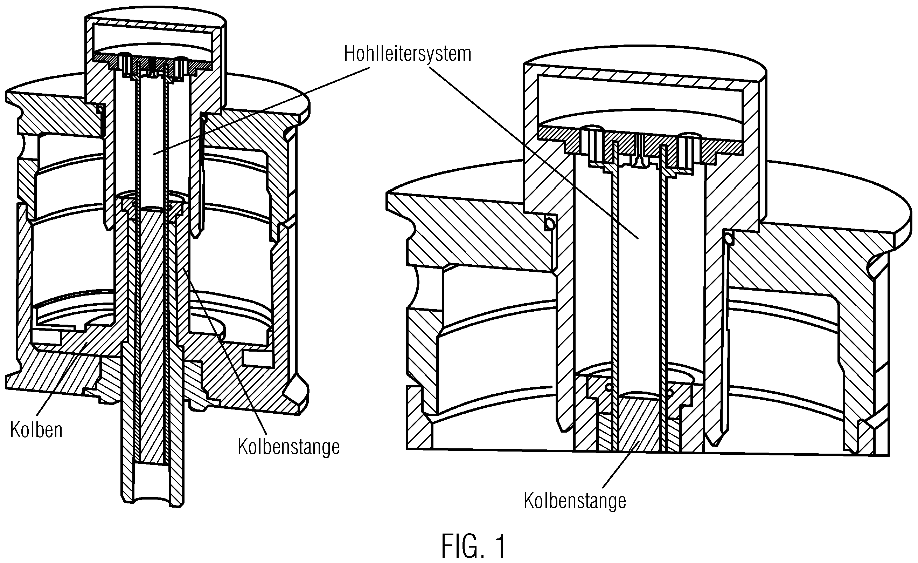

Fig. 1 zeigt den mechanischen Aufbau des Sensors (Mikrowellensensor) für alle bekannten Anwendungsfälle, bei denen nur ein Kolben zu erfassen ist (Einsitzventile, Absperrventile, Wechselventile). Hierbei läuft die Kolbenstange in einem sogenannten Führungsrohr. Das Führungsrohr ist fest mit dem Enddeckel verbunden. Am Ende des Führungsrohres befindet sich eine Antenne, wie sie in der deutschen Patentanmeldung Nr. 102 05 904.7 beschrieben ist. Der Antenne (Koppelsonde) wird eine koaxiale Welle beispielsweise über einen Kunststoffeinsatz zugeführt und über die Sonde in eine Hohlleiterwelle, beispielsweise im E01-Mode, in das Führungsrohr abgestrahlt, wobei die Einkopplung der elektromagnetischen Welle eine mechanische Treppenstufe ist. Die Welle wird an der Kolbenstange reflektiert und wieder von der Antenne empfangen, dort wiederum in eine koaxiale Welle umgesetzt und über eine nachgeschaltete Signalverarbeitung wird der Phasenunterschied zwischen gesendeter und empfangener Welle ausgewertet, um so die Position der Kolbenstange zu bestimmen. Am Ende der Kolbenstange kann wiederum ein HF-Kurzschluss in Form von zwei Scheiben mit dielektrischer Füllung, beispielsweise mit PPS40 Material, vorgesehen werden. Bei geeigneter Wahl des Feldtyps der Welle, beispielsweise E01, ist es zudem möglich, mittig in der Kolbenstange eine Bohrung vorzusehen, um beispielsweise Druckluft an nachgeschaltete Systeme weiterzuleiten.

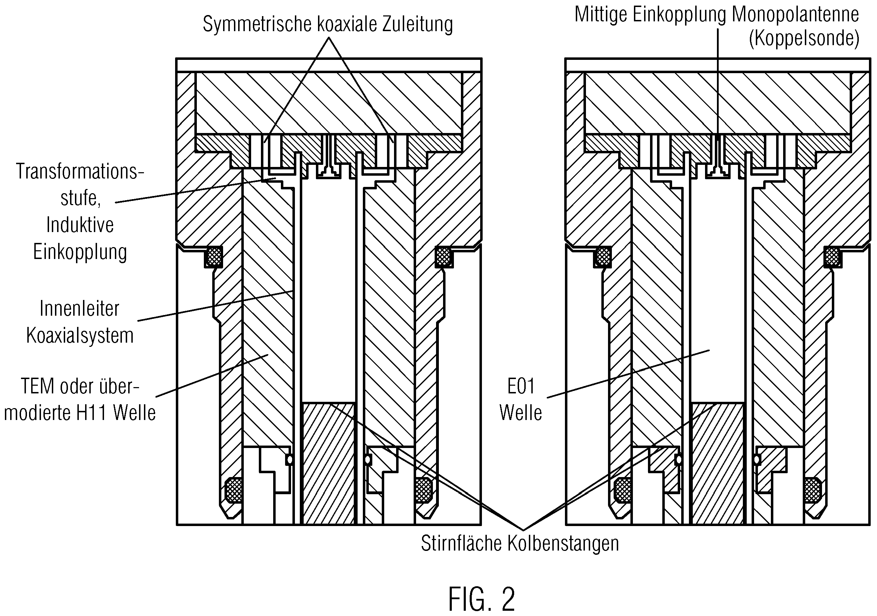

Bei Doppelsitzventilen ist die Position zweier ineinander laufender Kolbenstangen erfindungsgemäß gleichzeitig zu detektieren. Figuren 2A und 2B zeigen die Konfiguration. Dabei läuft die innere Kolbenstange in einem Führungsrohr, wie für die Einsitzventile bereits beschrieben. Auch der Mikrowellensensor sowie seine Einkopplung über die Antenne sind identisch. Zur Detektion der zweiten, äußeren Kolbenstange wird ein Koaxialsystem realisiert. Dabei dient das Führungsrohr als Innenleiter des Koaxialsystems für die Detektion der zweiten, äußeren Kolbenstange. Die Koaxialstruktur des Koaxialsystems dient wiederum als Innenleiter der Koaxialstruktur für die Detektion der nächstäußeren Kolbenstange usw. Die Einkopplung der elektromagnetischen Welle erfolgt über eine induktive Ankopplung an diesen Innenleiter. Dazu wird ein zwei- oder mehrstufiger Übergang realisiert um eine möglichst gute HF-Anpassung zu erzielen. Die induktive Ankopplung besteht aus zwei oder mehreren runden Scheiben, deren Außendurchmesser immer kleiner wird und die fest und elektrisch leitend mit dem Führungsrohr, beispielsweise über eine Verschraubung, verbunden sind. Dabei dienen die Scheiben (Ringe) mit abnehmendem Außendurchmesser als elektrische Transformationsstufen, um einen minimalen Reflexionsfaktor bei der Einkopplung der elektromagnetischen Welle in das Koaxialsystem zu erreichen. Der induktive Übergang, d. h. die Scheibe mit dem größten Durchmesser wird an der Außenseite direkt von der koaxialen Zuleitung kontaktiert. Da die Kontaktierung symmetrisch erfolgen muss, sind mindestens Zuführungen erforderlich. Es kann sich dabei natürlich auch um 4, 8, 16 usw. Kontaktierungen symmetrisch verteilt über 360 Grad handeln. Als Wellentyp wird der TEM-Mode oder bevorzugt der koaxiale H11-Mode erzeugt. Figuren 2A und 2B zeigen den Wellenverlauf für beide Sensoren. Auch hierbei wird die koaxiale Zuführung der elektromagnetischen Welle vom Sende- Empfangsmodul über beispielsweise eine druckdichte Einglasung oder einen Kunststoffeinsatz vorgenommen.

Die Sende- und Empfangselektronik befindet sich im Raum hinter der Einkoppelplatte. Die koaxiale Antennenzuführung durch die Koppelplatte wird direkt mit der Sende- Empfangselektronik verbunden. Diese ist in der Regel auf Leiterplatte z. B. in Form von SMD Bauteilen montiert.

Die Sendefrequenzen reichen von ein paar hundert MHz bis ca. 100 GHz je nach mechanischer Ausführung der Antriebe. Ein großer Vorteil dieser Anordnung besteht jedoch darin, dass über einen großen Bereich gängiger Ventilgrößen der Durchmesser der Kolbenstangen und des Führungsrohres konstant bleiben können und somit der Sensor universell einsetzbar ist.

## Patentansprüche

1. Abstandsmessvorrichtung mit einer Auswerteelektronik und einer Sensoreinrichtung, wobei zwei ineinander laufende Kolbenstangen gleichzeitig und unabhängig voneinander detektiert werden, und die zumindest zwei Koppelsonden zur Einspeisung von Sendesignalen in jeweilige Leitungsstrukturen mit jeweils einem Reflexionskörper aufweist, und die Reflexionskörper die Stirnseite der Kolbenstange der jeweiligen Zylinder sind, und wobei die innere Kolbenstange in einem Führungsrohr geführt ist und zur Detektion der äußeren Kolbenstange ein Koaxialsystem realisiert ist, wobei das Führungsrohr der inneren Kolbenstange als Innenleiter des Koaxialsystems für die Detektion der äußeren Kolbenstange dient.

2. Abstandsmessvorrichtung nach Anspruch 1, wobei zur Detektion der inneren Kolbenstange eine elektromagnetische Welle im Frequenzbereich von einigen MHz bis 100 GHz je nach Durchmesser der Kolbenstange in einem Rundhohlleitermode, vorzugsweise dem E01- Mode, in die Leitungsstruktur eingespeist wird.

3. Abstandsmessvorrichtung nach Anspruch 1 und 2, wobei zur Detektion der äußeren Kolbenstangen eine elektromagnetische Welle im Frequenzbereich von einigen MHz bis 100 GHz je nach Durchmesser der Kolbenstangen in das Koaxialsystem, vorzugsweise im TEM oder übermodierten H11 Mode, eingespeist wird.

4. Abstandsmessvorrichtung nach wenigstens einem der Ansprüche 1 bis 3, wobei die Einkopplung der elektromagnetischen Welle in die Rundhohlleiterstruktur zur Detektion der inneen Kolbenstange eine mechanische Treppenstufe ist.

5. Abstandsmessvorrichtung nach einem der Ansprüche 1 bis 3, wobei die Einkopplung der elektromagnetischen Welle in das Koaxialsystem induktiv erfolgt und zwar über metallische Ringe mit abnehmendem Außendurchmesser, wobei die Ringe mit abnehmendem Außendurchmesser als elektrische Transformationsstufen dienen, um einen minimalen Reflexionsfaktor bei der Einkopplung der elektromagnetischen Welle in das Koaxialsystem zu erreichen.

6. Abstandsmessvorrichtung nach Anspruch 5, wobei die Kontaktierung des Ringes mit dem größten Außendurchmesser symmetrisch erfolgt, d.h. mindestens zweimal um 180 Grad versetzt bzw. 4 mal jeweils um 90 Grad zwischen den einzelnen Kontaktierungen versetzt bzw. 8 mal jeweils um 45 Grad zwischen den einzelnen Kontaktierungen versetzt.

7. Abstandsmessvorrichtung nach einem der Ansprüche 1 bis 6, wobei die Kolbenstangen eine oder mehrere Bohrungen besitzen, um Druckluft durchzuleiten zur Ansteuerung nachgeschalteter Systeme.

8. Abstandsmessvorrichtung nach einem der Ansprüche 1 bis 3, wobei die Einkopplung der elektromagnetischen Welle in das Koaxialsystem kapazitiv oder über einem Koppelschlitz erfolgt.

9. Abstandsmessvorrichtung nach einem der Ansprüche 1 bis 7, wobei auf die Stirnfläche der Kolbenstange ein Kurzschluss für die elektromagnetische Welle in Form von zwei oder mehreren metallischen Scheiben mit dielektrischer Füllung zwischen den Scheiben montiert ist.

## Claims

1. Distance-measuring device having evaluation electronics and a sensor apparatus, wherein two piston rods which run one in the other are detected simultaneously and independently of one another, and which has at least two coupling probes for feeding transmission signals into the respective line structures, each with a reflection body, and the reflection bodies are the end side of the piston rod of the respective cylinders, and wherein the inner piston rod is guided in a guide tube, and a coaxial system is implemented for the detection of the outer piston rod, wherein the guide tube of the inner piston rod serves as an internal conductor of the coaxial system for the detection of the outer piston rod.

2. Distance-measuring device according to Claim 1, wherein for the detection of the inner piston rod an electromagnetic wave in the frequency range of several MHz to 100 GHz, depending on the diameter of the piston rod, is fed into the line structure in a circular waveguide mode, preferably the E01 mode.

3. Distance-measuring device according to Claims 1 and 2, wherein for the detection of the outer piston rods an electromagnetic wave in the frequency range of several MHz to 100 GHz, depending on the diameter of the piston rods, is fed into the coaxial system, preferably in the TEM or overmoded H11 mode.

4. Distance-measuring device according to at least one of Claims 1 to 3, wherein the means for feeding the electromagnetic wave into the circular waveguide structure for the detection of the inner piston rod is a mechanical step.

5. Distance-measuring device according to one of Claims 1 to 3, wherein the electromagnetic wave is fed inductively into the coaxial system, specifically by means of metallic rings with a decreasing outer diameter, wherein the rings with a decreasing outer diameter serve as electrical transformation stages in order to achieve a minimum reflection factor when feeding the electromagnetic wave into the coaxial system.

6. Distance-measuring device according to Claim 5, wherein the ring makes contact with the maximum outer diameter symmetrically, i.e. offset at least twice by 180 degrees or offset four times in each case by 90 degrees between the individual contact-forming means or offset eight times in each case by 45 degrees between the individual contact-forming means.

7. Distance-measuring device according to one of Claims 1 to 6, wherein the piston rods have one or more drilled holes in order to pass through compressed air for the actuation of systems arranged downstream.

8. Distance-measuring device according to one of Claims 1 to 3, wherein the electromagnetic wave is fed into the coaxial system capacitively or via a coupling aperture.

9. Distance-measuring device according to one of Claims 1 to 7, wherein a short-circuit for the electromagnetic wave in the form of two or more metallic discs with a dielectric filling between the discs is mounted on the end face of the piston rod.

## Revendications

1. Dispositif de mesure d'écartement comportant une électronique d'évaluation et un dispositif à capteurs, dans lequel deux tiges de piston se déplaçant l'une dans l'autre sont détectées simultanément et indépendamment l'une de l'autre, et comportant au moins deux sondes de couplage pour injecter des signaux d'émission dans des structures de conduction respectives ayant respectivement un corps de réflexion, et les corps de réflexion sont les faces avant des tiges de piston des cylindres respectifs, et dans lequel la tige de piston interne est guidée dans un tube de guidage et un système coaxial est réalisé pour détecter la tige de piston externe, dans lequel le tube de guidage de la tige de piston interne sert de guide interne du système coaxial pour la détection de la tige de piston externe.

2. Dispositif de mesure d'écartement selon la revendication 1, dans lequel une onde électromagnétique se situant dans la plage de fréquences de quelques MHz à 100 GHz selon le diamètre de la tige de piston est injectée dans un mode de guide d'ondes circulaire, de préférence le mode E01, dans la structure de conduction, pour détecter la tige de piston interne.

3. Dispositif de mesure d'écartement selon la revendication 1 ou 2, dans lequel une onde électromagnétique se situant dans la plage de fréquences de quelques MHz à 100 GHz selon le diamètre des tiges de piston est injectée dans le système coaxial, de préférence dans le mode TEM ou dans le mode surmodé H11, pour détecter les tiges de piston externes.

4. Dispositif de mesure d'écartement selon au moins l'une des revendications 1 à 3, dans lequel le couplage en entrée de l'onde électromagnétique dans la structure de guide d'ondes circulaire pour détecter la tige de piston interne est un escalier mécanique.

5. Dispositif de mesure d'écartement selon l'une quelconque des revendications 1 à 3, dans lequel le couplage en entrée de l'onde électromagnétique dans le système coaxial s'effectue par induction, au moyen d'anneaux métalliques ayant des diamètres extérieurs décroissants, dans lequel les anneaux ayant des diamètres extérieurs décroissants sont utilisés en tant qu'étages de transformation électriques permettant d'atteindre un facteur de réflexion minimal lors du couplage en entrée des ondes électromagnétiques dans le système coaxial.

6. Dispositif de mesure d'écartement selon la revendication 5, dans lequel le contact de l'anneau ayant le diamètre extérieur le plus élevé s'effectue de manière symétrique, c'est-à-dire de manière décalée d'au moins le double de 180 degrés, par exemple décalée quatre fois de 90 degrés entre les contacts individuels ou décalée huit fois de respectivement 45 degrés entre les contacts individuels.

7. Dispositif de mesure d'écartement selon l'une quelconque des revendications 1 à 6, dans lequel les tiges de piston possèdent un ou plusieurs alésages permettant d'acheminer de l'air sous pression pour commander les systèmes connectés en aval.

8. Dispositif de mesure d'écartement selon l'une quelconque des revendications 1 à 3, dans lequel le couplage en entrée de l'onde électromagnétique dans le système coaxial s'effectue de manière capacitive ou par l'intermédiaire d'une fente de couplage.

9. Dispositif de mesure d'écartement selon l'une quelconque des revendications 1 à 7, dans lequel un court-circuit pour l'onde électromagnétique est monté sous la forme de deux ou de plusieurs disques métalliques comportant un remplissage diélectrique entre les disques sur la surface avant de la tige de piston.
